# EUROPEAN PATENT SPECIFICATION

(11) **EP 0 399 617 B1**
(45) Date of publication and mention of the grant of the patent: **03.08.1994**
(21) Application number: 90201300.2
(22) Date of filing: 22.05.1990
(51) Int. Cl.: C08G 67/02

(54) **Polymers of carbon monoxide with olefinically unsaturated compounds**
Polymere auf Basis von Kohlenmonoxid mit olefinisch ungesättigten Verbindungen
Polymères de monoxyde de carbone avec des composés oléfiniquement insaturés

(30) Priority: 24.05.1989 NL 8901298
(43) Date of publication of application: 28.11.1990
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 229 408
- EP-A- 0 345 847
- EP-A- 0 351 023

## Description

The invention relates to polymers of carbon monoxide with one or more olefinically unsaturated compounds.

Linear polymers of carbon monoxide with one or more α-olefins are copolymers in which the units originating in carbon monoxide on the one hand, and the units originating in the applied α-olefins on the other hand, occur in alternating order. These polymers can be obtained by contacting the monomers with a catalyst composition based upon
a) a palladium compound,
b) an anion of an acid with a pKa of less than 4, and
c) a nitrogen bidentate ligand of the general formula 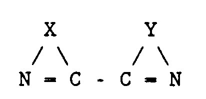 wherein X and Y represent identical or different organic bridging groups with each three or four atoms in the bridge at least two of which are carbon atoms, and
d) an organic oxidant.

In the polymers thus prepared, the units originating in carbon monoxide occur exclusively in the ketone structure. The carbon atoms of these units are interconnected through a bridge made up of the α- and β-carbon atoms of the α-olefin used.

The Applicant recently carried out an investigation into the application of the afore-mentioned catalyst compositions for the preparation of polymers of carbon monoxide with olefinically unsaturated bicyclic compounds, which compounds contain a cyclohexane ring in which the carbon atoms 1 and 4 are interconnected through one oxygen or carbon atom, in which the carbon atoms 5 and 6 are interconnected through an olefinic double bond and which may be substituted at the carbon atoms 2 and/or 3. Examples of such compounds are norbornene, norbornene-2,3-dicarboxylic acid, norbornene-2,3-dicarboxylic acid anhydride, 3-methyl-norbornene-2-carboxylic acid and dicyclopentadiene.

The investigation has shown that these catalyst compositions can be used to prepare linear polymers in which the units originating in carbon monoxide on the one hand, and the units originating in the applied olefinically unsaturated bicyclic compounds on the other hand occur in alternating order. The investigation has further shown that, depending on the type of olefinically unsaturated bicyclic compound applied, the polymers obtained are polymers in which the units originating in carbon monoxide may be present in two different structures, viz. in the ketone structure mentioned hereinbefore and in the spiroketal structure. The difference between the ketone structure and the spiroketal structure may be illustrated as follows, with the olefinically unsaturated bicyclic compounds as described earlier being represented by the simplified general formula 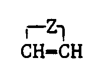
in which the two doubly bonded carbon atoms represent the carbon atoms 5 and 6 of the cyclohexane ring. If polymers of carbon monoxide with such an olefinically unsaturated bicyclic compound contain units originating in carbon monoxide having the ketone structure, the polymer molecules may be represented by the following scheme: 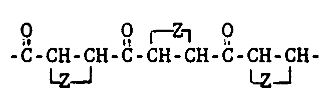
The carbon atoms of the units originating in carbon monoxide are connected through a bridge made up of the carbon atoms 5 and 6 of the cyclohexane ring present in the olefinically unsaturated bicyclic compound. On the other hand, if the polymers contain units having the spiroketal structure, the polymer may be represented schematically as follows: 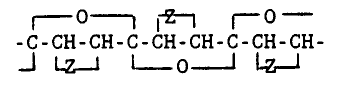
Herein the carbon atoms of the units originating in carbon monoxide are connected not only through the afore-mentioned bridge made up of the carbon atom 5 and 6 of the cyclohexane ring present in the olefinically unsaturated bicyclic compound, but also through an oxygen atom of either one of the two units originating in carbon monoxide. Thus, if units originating in carbon monoxide occur in the spiroketal structure, the polymers hold a plurality of substituted tetrahydrofuran rings which are interlinked through spiro-carbon atoms.

Finally, the investigation has shown that on the basis of the percentages of units originating in carbon monoxide occurring either in the ketone structure or in the spiroketal structure in the polymers prepared by using carbon monoxide, the olefinically unsaturated bicyclic compounds can be divided into two classes. The first class comprises the monoolefinically unsaturated bicyclic compounds, such as norbornene and the afore-mentioned norbornenes, that are substituted in the 2 and/or 3 position with a carboxy group. Upon polymerization of carbon monoxide with these monomers under the conditions as applied thus far polymers are obtained in which less than 25% of the units originating in carbon monoxide is present in the spiroketal structure. The second class comprises the diolefinically unsaturated bicyclic compounds, such as dicyclopentadiene. Subjecting the monomers of this class to the polymerization conditions, as applied thus far, leads to the formation of polymers in which more than 75% of the units originating in carbon monoxide is present in the spiroketal structure.

Some of the physical properties of a polymer may be influenced disadvantageously by structural irregularities of the polymer chains, i.e. the occurrence of chain inhomogeneities, such as units originating in carbon monoxide having the spiroketal structure along with such units having the ketone structure. It is therefore an object of the invention to provide a polymer of carbon monoxide with a monoolefinically unsaturated bicyclic compound which possesses substantially uniform polymer chains, i.e. having the units originating in carbon monoxide occurring predominantly in one structure.

It has now been shown that in the polymerization of carbon monoxide with a monomer belonging to the first class, both the reaction temperature and the molar ratio of the components b) and c) in the catalyst composition play an important role in connection with the percentages of units originating in carbon monoxide occurring in the spiroketal structure in the polymers prepared. It has been found that by applying a polymerization temperature below 55°C and a catalyst composition comprising more than 4 mol of component c) per mol of component b), polymers of carbon monoxide with a monomer belonging to the first class can be prepared in which - as was found earlier for polymers of carbon monoxide with a monomer belonging to the second class - more than 75% of the units originating in carbon monoxide is present in the spiroketal structure. This is surprising in view of the fact that the polymerization of carbon monoxide with a monomer belonging to the second class, whether it is carried out at temperatures above or below 55°C and using catalyst compositions comprising more or less than 4 mol of component c) per mol of component b), always leads to polymers in which more than 75% of the units originating in carbon monoxide occurs in the spiroketal structure. Linear alternating polymers of carbon monoxide with one or more monomers belonging to the first class, in which more than 75% of the units originating in carbon monoxide occurs in the spiroketal structure are novel polymers.

The present invention therefore relates to polymers of carbon monoxide with one or more olefinically unsaturated compounds, characterized in that
a) they can be obtained by polymerizing carbon monoxide with one or more monoolefinically unsaturated bicyclic compounds which contain a cyclohexane ring in which the carbon atoms 1 and 4 are interconnected through one oxygen or carbon atom, in which the carbon atoms 5 and 6 are interconnected through an olefinic double bond and which may be substituted at the carbon atoms 2 and/or 3,
b) they have a linear structure,
c) the units originating in carbon monoxide on the one hand, and the units originating in the monoolefinically unsaturated bicyclic compounds on the other hand, occur in alternating order, and
d) more than 75% of the units originating in carbon monoxide is present in the spiroketal structure.

The invention further relates to a process for the preparation of these polymers and also of corresponding polymers of carbon monoxide with one or more diolefinically unsaturated bicyclic compounds belonging to the second class mentioned hereinbefore, by contacting the monomers at a temperature below 55°C with a catalyst composition based upon
a) a palladium compound,
b) an anion of an acid with a pKa of less than 4, and
c) a nitrogen bidentate ligand of the general formula 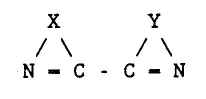 wherein X and Y represent identical or different organic bridging groups with each three or four atoms in the bridge at least two of which are carbon atoms, and
d) an organic oxidant,
which catalyst composition comprises more than 4 mol of component c) per mol of component b).

The monomers that are polymerized with carbon monoxide according to the invention contain a cyclohexane ring in which the carbon atoms 1 and 4 are interconnected through one oxygen or carbon atom, in which the carbon atoms 5 and 6 are interconnected through an olefinic double bond. If in these monomers the carbon atoms 1 and 4 are interconnected through an oxygen atom, they can be described as 1,4-endoxo-5-cyclohexene and derivatives. If in these monomers the carbon atoms 1 and 4 are interconnected through a carbon atom, which carbon atom carries exclusively two hydrogen atoms, they can be described as norbornene and derivatives. The carbon atom which forms the link between the carbon atoms 1 and 4 of the cyclohexane ring may have one or two hydrocarbon substituents. If this carbon atom carries two methyl groups, the monomers can be described as bornene and derivatives. In the monomers the carbon atoms 2 and/or 3 may carry a substituent, such as a hydrocarbyl group or an oxygen-containing hydrocarbyl group. Examples of suitable olefinically unsaturated bicyclic compounds which may be considered for polymerization with carbon monoxide according to the invention are bornene, norbornene, 3-methyl-norbornene-2-carboxylic acid, norbornene-2,3-dicarboxylic acid, norbornene-2,3-dicarboxylic acid anhydride, 2-(hydromethyl)norbornene, 1,4-endoxo-5-cyclohexene and 1,4-endoxo-5-cyclohexene-2,3-dicarboxylic acid anhydride. All of the monoolefinically unsaturated bicyclic compounds mentioned hereinbefore belong to the afore-mentioned first class. An example of a diolefinically unsaturated bicyclic compound belonging to the afore-mentioned second class is dicyclopentadiene. This compound may be regarded as a derivative of norbornene in which both the second and the third carbon atom of the cyclohexane ring carry a hydrocarbyl substituent, which hydrocarbyl substituents form a -CH=CH-CH₂- group.

In the process of the invention for the preparation of polymers, very favourable results were obtained when norbornene, 2-(hydroxymethyl)norbornene and dicyclopentadiene were used as olefinically unsaturated bicyclic monomers.

In the polymers prepared according to the invention, more than 75% of the units originating in carbon monoxide occurs in the spiroketal structure. Polymers in which more than 95% of the units originating in carbon monoxide and in particular substantially all the units originating in carbon monoxide occur in the spiroketal structure are preferred.

The process of the invention is conducted by contacting the monomers at a temperature below 55°C with a catalyst composition based upon the afore-mentioned components a)-d), which catalyst composition comprises more than 4 mol of component c) per mol of component b).

The palladium compound employed in the catalyst compositions as component a) is preferably a palladium salt of a carboxylic acid, and palladium acetate in particular. Examples of suitable acids with a pKa of less than 4 (determined in aqueous solution at 18°C) are mineral acids, such as sulphuric acid and perchloric acid, sulphonic acids, such as methanesulphonic acid, trifluoromethanesulphonic acid and para-toluenesulphonic acid, carboxylic acids, such as tartaric acid, and halocarboxylic acids, such as trichloroacetic acid, difluoroacetic acid and trifluoroacetic acid. Preference is given to an anion of an acid with a pKa of less than 2, as component b), in particular to the anion of a sulphonic acid, such as para-toluenesulphonic acid, or a halocarboxylic acid, such as trifluoroacetic acid. In the catalyst compositions, component b) may be taken up in the form of an acid and/or in the form of a salt, such as nickel perchlorate or copper para-tosylate.

In the nitrogen bidentate ligands that are eligible for use as component c) in the catalyst compositions, bridging groups X and Y are connected through the two carbon atoms depicted in the general formula. In addition to this link, there may exist a second link between bridging groups X and Y, such as in 1,10-phenanthroline and compounds derived therefrom. If, besides carbon atoms, bridging groups X and Y include further atoms in the bridge, these are preferably nitrogen atoms. Preference is further given to nitrogen bidentate ligands in which bridging groups X and Y are identical. Examples of suitable nitrogen bidentate ligands are 2,2′-bipyridine and compounds derived therefrom, such as 4,4′-dimethyl-2,2′-bipyridine, 1,10-phenanthroline and compounds derived therefrom, such as 4,7-dimethyl-1,10-phenanthroline and also 2,2′-biquinoline and 2-(2-pyridyl)benzimidazole. It is preferred to use 2,2′-bipyridine and 1,10-phenanthroline as components c).

In the catalyst compositions, components b) and c) are preferably present in quantities of 1-1000 and 4-4000, respectively, and in particular in quantities of 2-100 and 8-400 mol, respectively, per mol of palladium. Preferably, the catalyst compositions comprise more than 4.5 and in particular more than 5 mol of component c) per mol of component b).

In addition to components a)-c), the catalyst compositions should include an organic oxidant as component d). Examples of suitable organic oxidants are 1,2- and 1,4-quinones, aliphatic nitrites, such as butyl nitrite and aromatic nitro compounds, such as nitrobenzene and 2,4-dinitrotoluene. The quantity of organic oxidant used in the catalyst compositions preferably amounts to 1-10000 and in particular to 10-5000 mol per mol of palladium. A preferred component d) is 1,4-benzoquinone, nitrobenzene or 2,4-dinitrotoluene.

The process of the invention is preferably carried out by contacting the monomers with a solution of the catalyst composition in a diluent in which the polymers are insoluble or virtually insoluble. Suitable diluents are lower aliphatic alcohols such as methanol. The polymerization may be carried out batchwise or continuously.

The quantity of catalyst composition employed in the process of the invention may vary within wide limits. The quantity of catalyst composition used per mol of olefinically unsaturated bicyclic compound to be polymerized preferably contains 10⁻⁷-10⁻³ and in particular 10⁻⁶-10⁻⁴ mol of palladium.

The process of the invention should be carried out at a temperature below 55°C. Preference is given to the use of a polymerization temperature lower than 50°C and in particular lower than 45°C. The pressure preferably amounts to 2-150 bar and in particular to 35-100 bar. The molar ratio of the olefinically unsaturated bicyclic compounds relative to carbon monoxide preferably lies in a range of from 10:1 to 1:10 and in particular of from 5:1 to 1:5.

The invention will now be illustrated by the following examples.

### Example 1

A carbon monoxide/norbornene copolymer was prepared as follows. A stirred autoclave with a capacity of 250 ml was charged with a catalyst solution comprising
50 ml methanol,
0.1 mmol palladium acetate,
0.5 mmol para-toluenesulphonic acid,
3 mmol 2,2-bipyridine, and
30 mmol 2,4-dinitrotoluene.

After 20 ml of norbornene had been introduced into the autoclave, carbon monoxide was blown in until a pressure of 40 bar was reached. The contents of the autoclave were heated to a temperature of 40°C. Polymerization was terminated after 5 hours, by cooling to room temperature and releasing the pressure. The copolymer was filtered off, washed with methanol and dried. 22.6 g of copolymer was obtained.

### Example 2

A carbon monoxide/2-(hydroxymethyl)norbornene copolymer was prepared substantially in the same way as the carbon monoxide/norbornene copolymer of Example 1, except for the following differences
a) the catalyst solution comprised 20 mmol of 1,4-benzoquinone instead of 2,4-dinitrotoluene,
b) 10 g of 2-(hydroxymethyl)norbornene instead of norbornene was introduced into the autoclave, and
c) the reaction temperature was 25°C instead of 40°C. 12.5 g of copolymer was obtained.

### Example 3

A carbon monoxide/2-(hydroxymethyl)norbornene copolymer was prepared substantially in the same way as in Example 2, except for the following differences
a) the catalyst solution comprised 30 mmol of nitrobenzene instead of 1,4-benzoquinone, and
b) the reaction temperature was 40°C instead of 25°C. 13 g of copolymer was obtained.

### Example 4

A carbon monoxide/norbornene copolymer was prepared substantially in the same way as in Example 1, except for the following differences
a) the catalyst solution comprised 10 ml instead of 50 ml of methanol, 2 mmol instead of 0,5 mmol of para-toluenesulphonic acid and 20 mmol of 1,4-benzoquinone instead of 2,4-dinitrotoluene,
b) 30 ml instead of 20 ml of norbornene was introduced into the autoclave,
c) the reaction temperature was 90°C instead of 40°C, and
d) the reaction time was 2 hours instead of 5 hours. 26 g of copolymer was obtained.

### Example 5

A carbon monoxide/norbornene-2,3-dicarboxylic acid anhydride copolymer was prepared substantially in the same way as the carbon monoxide/norbornene copolymer of Example 1, except for the following differences
a) the catalyst solution comprised 1 mmol instead of 0.5 mmol of para-toluenesulphonic acid and 20 mmol of 1,4-benzoquinone instead of 2,4-dinitrotoluene,
b) 10 g of norbornene-2,3-dicarboxylic acid anhydride instead of norbornene was introduced into the autoclave, and
c) the reaction temperature was 60°C instead of 40°C. 12 g of copolymer was obtained.

### Example 6

A carbon monoxide/3-methyl-norbornene-2-carboxylic acid copolymer was prepared substantially in the same way as the carbon monoxide/norbornene copolymer of Example 1, except for the following differences
a) the catalyst solution comprised 1 mmol instead of 0.5 mmol of para-toluenesulphonic acid and 20 mmol of 1,4-benzoquinone instead of 2,4-dinitrotoluene,
b) 10 g of 3-methyl-norbornene-2-carboxylic acid instead of norbornene was introduced into the autoclave,
c) carbon monoxide was blown into the autoclave until a pressure of 30 bar instead of 40 bar was reached,
d) the reaction temperature was 65°C instead of 40°C, and
e) the reaction time was 1 hour instead of 5 hours. 7 g of copolymer was obtained.

### Example 7

A carbon monoxide/norbornene-2,3-dicarboxylic acid copolymer was prepared substantially in the same way as the carbon monoxide/norbornene copolymer of Example 1, except for the following differences
a) the catalyst solution comprised 1 mmol instead of 0.5 mmol of para-toluenesulphonic acid and 20 mmol of 1,4-benzoquinone instead of 2,4-dinitrotoluene,
b) 10 g of norbornene-2,3-dicarboxylic acid was introduced into the autoclave instead of norbornene,
c) the reaction temperature was 60°C instead of 40°C, and
d) the reaction time was 1 hour instead of 5 hours. 6 g of copolymer was obtained.

### Example 8

A carbon monoxide/dicyclopentadiene copolymer was prepared substantially in the same way as the carbon monoxide/norbornene copolymer of Example 1, except for the following differences
a) the catalyst solution comprised a mixture of 10 ml of methanol and 15 ml of tetrahydrofuran instead of 50 ml of methanol, 2 mmol instead of 0.5 mmol of para-toluenesulphonic acid and 20 mmol of 1,4-benzoquinone instead of 2,4-dinitrotoluene,
b) 50 ml of dicylcopentadiene instead of norbornene was introduced into the autoclave,
c) the reaction temperature was 20°C instead of 40°C, and
d) the reaction time was 16 hours instead of 5 hours. 11.5 g of copolymer was obtained.

### Example 9

A carbon monoxide/dicyclopentadiene copolymer was prepared substantially in the same way as the carbon monoxide/norbornene copolymer of Example 1, except for the following differences
a) the catalyst solution comprised 60 mmol instead of 30 mmol of 2,4-dinitrotoluene,
b) 20 ml of dicyclopentadiene instead of norbornene was introduced into the autoclave, and
c) the reaction temperature was 60°C instead of 40°C. 20 g of copolymer was obtained.

### Example 10

A carbon monoxide/dicyclopentadiene copolymer was prepared substantially in the same way as the carbon monoxide/norbornene copolymer of Example 1, except for the following differences
a) the catalyst solution comprised 20 mmol of 1,4-benzoquinone instead of 2,4-dinitrotoluene,
b) 20 ml of dicyclopentadiene instead of norbornene was introduced into the autoclave,
c) the reaction temperature was 20°C instead of 40°C, and
d) the reaction time was 15 hours instead of 5 hours. 19 g of copolymer was obtained.

Of Examples 1-10, Examples 1-3 and 10 are examples in accordance with the invention. These Examples were carried out at temperatures below 55°C and using catalyst compositions comprising more than 4 mol of component c) per mol of component b) to prepare copolymers of carbon monoxide with norbornene, 2-(hydroxymethyl)-norbornene and dicyclopentadiene, respectively. With the aid of ¹³C-NMR analysis applied to solutions of the polymers in deuterochloroform it was established that the polymers had a linear alternating structure and that the units originating in carbon monoxide present therein occurred virtually entirely in the spiroketal structure. The polymers prepared according to Examples 1-3 are novel.

Examples 4-9 fall outside the scope of the invention and have been included for comparison. Examples 4-7 were carried out at temperatures higer than 55°C and by using catalyst compositions comprising less than 4 mol of component c) per mol of component b) to prepare copolymers of carbon monoxide with norbornene, norbornene-2,3-dicarboxylic acid anhydride, 3-methyl-norbornene-2-carboxylic acid and norbornene-2,3-dicarboxylic acid, respectively. With the aid of ¹³C-NMR analysis applied as described hereinbefore it was established that they had a linear alternating structure and that more than 75% of the units originating in carbon monoxide present therein occurred in the ketone structure.

Examples 8 and 9 concern the preparation of linear alternating copolymers of carbon monoxide with dicyclopentadiene. With the aid of ¹³C-NMR analysis applied as described hereinbefore it was established that, although in Example 8 a catalyst composition was used which comprised less than 4 mol of component c) per mol of component b) and in Example 9 a temperature was applied which was higher than 55°C, still in the polymers obtained, the units originating in carbon monoxide were virtually entirely present in the spiroketal structure.

## Claims

1. Polymers of carbon monoxide with one or more olefinically unsaturated compounds, characterized in that
a) they can be obtained by polymerizing carbon monoxide with one or more monoolefinically unsaturated bicyclic compounds which contain a cyclohexane ring in which the carbon atoms 1 and 4 are interconnected through one oxygen or carbon atom, in which the carbon atoms 5 and 6 are interconnected through an olefinic double bond and which may be substituted at the carbon atoms 2 and/or 3,
b) they have a linear structure,
c) the units originating in carbon monoxide on the one hand, and the units originating in the monoolefinically unsaturated bicyclic compounds on the other hand, occur in alternating order, and
d) more than 75% of the units originating in carbon monoxide is present in the spiroketal structure.

2. Polymers as claimed in claim 1, characterized in that more than 95% of the units originating in carbon monoxide is present therein in the spiroketal structure.

3. Polymers as claimed in claim 1 or 2, characterized in that they are polymers of carbon monoxide with norbornene or with 2-(hydroxymethyl)norbornene.

4. Process for the preparation of polymers of carbon monoxide with one or more olefinically unsaturated compounds, characterized in that a mixture of carbon monoxide with one or more olefinically unsaturated bicyclic compounds which contain a cyclohexane ring in which the carbon atoms 1 and 4 are interconnected through one oxygen or carbon atom, in which the carbon atoms 5 and 6 are interconnected through an olefinic double bond and which may be substituted at the carbon atoms 2 and/or 3, is contacted at a temperature below 55°C with a catalyst composition based upon
a) a palladium compound,
b) an anion of an acid with a pKa of less than 4, and
c) a nitrogen bidentate ligand of the general formula 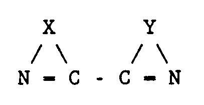 wherein X and Y represent identical or different organic bridging groups with each three or four atoms in the bridge at least two of which are carbon atoms, and
d) an organic oxidant,
which catalyst composition comprises more than 4 mol of component c) per mol of component b).

5. Process as claimed in claim 4, characterized in that, as component b), the catalyst composition comprises an anion of an acid with a pKa of less than 2.

6. Process as claimed in claim 4 or 5, characterized in that per mol of palladium, the catalyst composition comprises 1-1000 mol of component b), 4-4000 mol of component c) and 1-10000 mol of component d).

7. Process as claimed in claim 4, 5 or 6, characterized in that per mol of component b), the catalyst composition comprises more than 4.5 mol of component c).

8. Process as claimed in any of claims 4-7, characterized in that polymerization is carried out at a temperature below 50°C, a pressure of 2-150 bar and a molar ratio of the olefinically unsaturated bicyclic compounds relative to carbon monoxide in the range of from 10:1 to 1:10 and in that per mol of olefinically unsaturated bicyclic compound to be polymerized such a quantity of catalyst composition is employed as to contain 10⁻⁷-10⁻³ mol of palladium.

## Patentansprüche

1. Polymere aus Kohlenmonoxid und einer oder mehreren olefinisch ungesättigten Verbindung(en), dadurch gekennzeichnet, daß
a) sie erhältlich sind durch das Polymerisieren von Kohlenmonoxid mit einer oder mehreren monoolefinisch ungesättigten bicyklischen Verbindung(en), welche einen Cyclohexanring enthält (enthalten), in welchem die Kohlenstoffatome in der 1- und 4-Stellung durch ein Sauerstoff- oder Kohlenstoffatom miteinader verbunden sind, in welchem die Kohlenstoffatome in der 5- und 6-Stellung durch eine olefinische Doppelbindung miteinander verbunden sind und welcher an den Kohlenstoffatomen in der 2- und/oder 3-Stellung substituiert sein kann,
b) sie eine lineare Struktur aufweisen,
c) einerseits die von Kohlenmonoxid abgeleiteten Einheiten und andererseits die von den monoolefinisch ungesättigten bicyklischen Verbindungen abgeleiteten Einheiten in alternierender Anordnung vorliegen, und
d) mehr als 75 % der von Kohlenmonoxid abgeleiteten Einheiten in der Spiroketalstruktur vorliegen.

2. Polymere, wie in Anspruch 1 beansprucht, dadurch gekennzeichnet, daß mehr als 95 % der von Kohlenmonoxid abgeleiteten Einheiten in der Spiroketalstruktur vorliegen.

3. Polymere, wie in Anspruch 1 oder 2 beansprucht, dadurch gekennzeichnet, daß es sich um Polymere von Kohlenmonoxid und Norbornen oder von Kohlenmonoxid und 2-(Hydroxymethyl)norbornen handelt.

4. Verfahren zur Herstellung von Polymeren aus Kohlenmonoxid und einer oder mehreren olefinisch ungesättigten Verbindung(en), dadurch gekennzeichnet, daß eine Mischung aus Kohlenmonoxyd und einer oder mehreren olefinisch ungesättigten bicyklischen Verbindung(en), welche einen Cyclohexanring enthält (enthalten), in welchem die Kohlenstoffatome in der 1- und 4-Stellung durch ein Sauerstoff- oder Kohlenstoffatom miteinander verbunden sind, in welchem die Kohlenstoffatome in der 5- und 6-Stellung durch eine olefinische Doppelbindung miteinander verbunden sind und welcher an den Kohlenstoffatomen in der 2- und/oder 3-Stellung substituiert sein kann, bei einer Temperatur unterhalb 55°C, mit einer Katalysatorzusammensetzung kontaktiert wird, die auf den nachstehenden Komponenten basiert:
a) einer Palladiumverbindung,
b) dem Anion einer Säure mit einem pKa-Wert von weniger als 4, und
c) einem zweizähnigen Stickstoffliganden der allgemeinen Formel 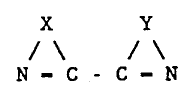 in welcher X und Y gleiche oder unterschiedliche organische Brückengruppen mit jeweils drei oder vier Atomen in der Brücke darstellen, von denen mindestens zwei Kohlenstoffatome sind, und
d) einem organischen Oxidationsmittel,
wobei die Katalysatorzusammensetzung mehr als 4 Mol der Komponente c) je Mol der Komponente b) enthält.

5. Verfahren, wie in Anspruch 4 beansprucht, dadurch gekennzeichnet, daß die Katalysatorzusammensetzung als Komponente b) ein Anion einer Säure mit einem pKa-Wert von weniger als 2 enthält.

6. Verfahren, wie in Anspruch 4 oder 5 beansprucht, dadurch gekennzeichnet, daß die Katalysatorzusammensetzung je Mol Palladium 1 bis 1000 Mol der Komponente b), 4 bis 4000 Mol der Komponente c) und 1 bis 10000 Mol der Komponente d) enthält.

7. Verfahren, wie in Anspruch 4, 5 oder 6 beansprucht, dadurch gekennzeichnet, daß die Katalysatorzusammensetzung je Mol der Komponente b) mehr als 4,5 Mol der Komponente c) enthält.

8. Verfahren, wie in den Ansprüchen 4 bis 7 beansprucht, dadurch gekennzeichnet, daß die Polymerisation bei einer Temperatur unterhalb 50°C, einem Druck im Bereich von 2 bis 150 bar und einem Molverhältnis von olefinisch ungesättigter bicyklischer Verbindung relativ zu Kohlenmonoxid im Bereich von 10:1 bis 1:10 durchgeführt wird und daß je Mol der zu polymerisierenden olefinisch ungesättigten bicyklischen Verbindungen eine solche Menge der Katalysatorzusammensetzung angewendet wird, die 10⁻⁷ bis 10⁻³ Mol Palladium enthält.

## Revendications

1. Polymères de monoxyde de carbone et d'un ou de plus d'un composé à insaturation oléfinique, caractérisé en ce que:
a) ils peuvent être obtenus en polymérisant du monoxyde de carbone avec un ou plus d'un composé bicyclique à insaturation monooléfinique, qui renferme un noyau cyclohexane dans lequel des atomes de carbone 1 et 4 sont interconnectés par l'intermédiaire d'un atome d'oxygène ou d'un atome de carbone, dans lequel les atomes de carbone 5 et 6 sont interconnectés par l'intermédiaire d'une double liaison oléfinique et qui peut être substitué au niveau des atomes de carbone 2 et/ou 3,
b) ils ont une structure linéaire,
c) les motifs provenant du monoxyde de carbone, d'une part, et les motifs provenant des composés bicycliques à insaturation monooléfinique, d'autre part, sont présents en ordre alterné, et,
d) plus de 75% des motifs provenant du monoxyde de carbone sont présents dans la structure spirocétale.

2. Polymères tels que revendiqués dans la revendication 1, caractérisés en ce que plus de 95% des motifs provenant du monoxyde de carbone sont présents dans la structure spirocétale.

3. Polymères tels que revendiqués dans la revendication 1 ou 2, caractérisés en ce que ce sont des polymères de monoxyde de carbone et de norbornène ou de 2-(hydroxyméthyl)norbornène.

4. Procédé pour la préparation de polymères de monoxyde de carbone et d'un ou de plus d'un composé à insaturation oléfinique, caractérisé en ce qu'un mélange de monoxyde de carbone et d'un ou de plus d'un composé bicyclique à insaturation oléfinique, qui renferme un noyau cyclohexane dans lequel les atomes de carbone 1 et 4 sont interconnectés par l'intermédiaire d'un atome d'oxygène ou de carbone, dans lesquels les atomes de carbone 5 et 6 sont interconnectés par l'intermédiaire d'une double liaison oléfinique et qui peut être substitué au niveau des atomes de carbone 2 et/ou 3, est mis en contact à une température inférieure à 55°C avec une composition catalytique à base de:
a) un composé du palladium,
b) un anion d'un acide présentant pKa inférieur à 4, et
c) un ligand bidenté azoté de la formule générale 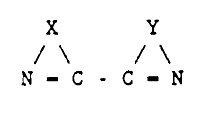 dans laquelle X et Y représentent des groupes pontants organiques, identiques ou différents, avec chacun 3 ou 4 atomes dans le pont, dont au moins deux sont des atomes de carbone, et
d) un agent oxydant organique.

5. Procédé tel que revendiqué dans la revendication 4, caractérisé en ce que, en tant que composant b), la composition de catalyseur comporte un anion d'un acide présentant un pKa inférieur à 2.

6. Procédé tel que revendiqué dans la revendication 4 ou 5, caractérisé en ce que par mode de palladium, la composition catalytique comprend de 1 à 1000 modes du composant b), de 4 à 4000 moles du composants c) et de 1 à 10000 moles du composant d).

7. Procédé tel que revendiqué dans la revendication 4, 5 ou 6, caractérisé en ce que par mole de composant b), la composition catalytique comporte plus de 4,5 moles de composant c).

8. Procédé tel que revendiqué dans l'une quelconque des revendications 4 à 7, caractérisé en ce que la polymérisation est mise en oeuvre à une température inférieure à 50°C, une pression de 2 à 150 bars et un rapport molaire des composés bicycliques à insaturation oléfinique, par rapport au monoxyde de carbone dans la gamme de 10:1 à 1:10 et que par mode de composé bicyclique à insaturation oléfinique devant être polymérisés, cette quantité de composition catalytique est utilisée à raison d'une teneur de 10⁻⁷ à 10⁻³ moles de palladium.
